(19) Europäisches Patentamt
European Patent Office
Office européen des brevets

(11) **EP 3 082 072 B1**

(12) **FASCICULE DE BREVET EUROPEEN**

(45) Date de publication et mention
de la délivrance du brevet:
**27.12.2017 Bulletin 2017/52**

(51) Int Cl.:
***G06K 19/07*** *(2006.01)*     ***G05F 3/26*** *(2006.01)*
***G06K 7/10*** *(2006.01)*

(21) Numéro de dépôt: **15163422.7**

(22) Date de dépôt: **13.04.2015**

(54) **BLOC RÉCEPTEUR D'UNE RADIO-ÉTIQUETTE**

EMPFANGSBLOCK EINES RFID-TAGS

RECEIVING UNIT OF AN RFID TAG

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**19.10.2016 Bulletin 2016/42**

(73) Titulaire: **EM Microelectronic-Marin SA**
**2074 Marin (CH)**

(72) Inventeurs:
• **Lamothe, Christian**
**2105 Travers (CH)**
• **Coulot, Thomas**
**25800 Valdahon (FR)**
• **Stojanovic, Goran**
**2000 Neuchâtel (CH)**

(74) Mandataire: **Goulette, Ludivine et al**
**ICB**
**Ingénieurs Conseils en Brevets SA**
**Faubourg de l'Hôpital 3**
**2001 Neuchâtel (CH)**

(56) Documents cités:
**US-A1- 2010 079 921**     **US-A1- 2013 223 116**

• **Davor Vinko ET AL: "Modification of the Cockcroft-Walton charge pump by using switched capacitors technique for improved performance under capacitive loads", WSEAS TRANSACTIONS on CIRCUITS and SYSTEMS, 1 janvier 2009 (2009-01-01), pages 167-176, XP055213227, Extrait de l'Internet: URL:https://bib.irb.hr/datoteka/380562.27-099.pdf [extrait le 2015-09-14]**

**Description**

La présente invention concerne un bloc récepteur comprenant une première et une seconde borne d'entrée auxquelles sont connectés une antenne, un étage de communication apte à démoduler et/ou moduler un signal entrant dans ledit étage de communication et un étage d'alimentation comprenant un convertisseur de tension permettant d'alimenter en puissance le reste du circuit.

ARRIERE PLAN TECHNOLOGIQUE

Il est connu des radio-étiquettes appelées aussi étiquettes électroniques ou balises de communication munies d'un circuit de communication. Un tel circuit de communication comprend une antenne connectée à une étape de modulation/démodulation permettant de traiter un signal entrant ou un signal sortant. Une telle radio-étiquette est également munie d'un système d'alimentation c'est-à-dire un étage qui utilise l'énergie reçue lors de la réception d'un signal pour alimenter toute la radio-étiquette en énergie électrique.

Un tel étage comprend généralement un convertisseur AC/DC convertissant un signal alternatif reçu en un signal d'alimentation continu. Un tel convertisseur AC/DC se présente par exemple sous la forme d'un pont de diode de type pont de Graetz.

Or, il est nécessaire, selon le type de signaux reçus, d'avoir un convertisseur AC/DC capable de travailler à faible puissance mais aussi à haute puissance.

De plus, un problème des circuits convertisseurs AC/DC est qu'ils peuvent présenter des capacités parasites. En effet, chaque antenne fonctionne de façon optimale avec un condensateur d'accord. On recherche donc à maîtriser la valeur du condensateur d'accord à associer à l'antenne et donc à réduire la valeur des condensateurs parasites afin qu'ils ne perturbent significativement la caractéristique recherchée pour l'antenne. Pour ce faire, comme le convertisseur AC/DC est le plus grand contributeur de condensateurs parasites, il est important de sélectionner des montages minimisant l'apport de condensateurs parasites.

De plus, les radio-étiquettes sont confrontées à un risque de destruction du convertisseur AC/DC suite à une tension trop haute au niveau de ce convertisseur AC/DC qui provoque l'endommagement des composants. Une solution connue est d'écrêter le signal au-delà d'une valeur de tension prédéterminée. Or, un inconvénient de l'écrêtage du signal d'entrée est d'engendrer une distorsion de ce signal résultant en une perte d'information.

US2010/0079921 A1 décrit un circuit ayant un convertisseur de tension employé dans une radio-étiquette. Lorsque le potentiel de l'alimentation en courant continu qui est produit dans le circuit redresseur est supérieur ou égal à une valeur prédéterminée (une valeur de référence), le circuit de protection est amené à fonctionner par un switch (116), et la valeur du potentiel de l'alimentation en courant continu produit est réduite.

RESUME DE L'INVENTION

La présente invention cherche donc à pallier les inconvénients de l'art antérieur en fournissant un bloc récepteur d'une radio-étiquette qui améliore l'efficacité et qui tolère une grande variation de la tension du signal d'entrée tout en évitant les surtensions et distorsions de signal.

A cet effet, l'invention se propose de fournir un bloc récepteur selon la revendication 1. Dans un premier mode de réalisation avantageux, le convertisseur de tension est du type alternatif/continu.

Dans un second mode de réalisation avantageux, le convertisseur de tension comprend, en entrée, un générateur de masse composé d'un premier et d'un second transistor MOS de type N connectés ensemble de sorte que leurs sources sont reliées ensemble pour former la masse du convertisseur de tension, le drain du premier transistor étant connecté à la première borne d'entrée et à la grille du second transistor alors que le drain du second transistor étant connecté à la seconde borne d'entrée et à la grille du premier transistor, le convertisseur de tension comprenant en outre, une pluralité de structures identiques formant une partie modificatrice de tension, et en ce que ledit convertisseur comprend en sortie deux transistors MOS de type N dont les sources des transistors sont connectées entres elles pour former la ligne de sortie, les drains des transistors étant connectés à la dernière structure de la partie modificatrice de tension s'étendant depuis la première borne et, pour l'autre, à la dernière structure de la partie modificatrice de tension s'étendant depuis la seconde borne, chaque transistor ayant sa grille connectée à sa source.

Dans un troisième mode de réalisation avantageux, la partie modificatrice de tension est agencée de sorte qu'à partir de chacune des premières et secondes bornes d'entrée s'étend une série de structure identique connectée entres elles, la première structure de chaque série étant connectée à l'une des premières et secondes bornes d'entrée et à la structure suivante, le point de connexion entre deux structures étant connecté à l'une des premières ou secondes bornes d'entrée de sorte que chaque structure soit connectée à la première borne et à la seconde borne.

Dans un quatrième mode de réalisation avantageux, le circuit limiteur comprend au moins un transistor connecté par son drain à première borne d'entrée et par sa source à la seconde borne d'entrée, le signal de commande étant envoyé à sa grille afin de rendre ledit au moins un transistor plus ou moins passant.

Dans un cinquième mode de réalisation avantageux, le circuit limiteur comprend une pluralité de transistors montés en parallèle.

Dans un sixième mode de réalisation avantageux, le bloc régulation comprend en outre un générateur de tension de bandgap pour fournir les courants de polarisation et la tension de référence au circuit régulateur.

Dans un autre mode de réalisation avantageux, l'étage de communication est apte à fournir un signal représentatif d'une action de communication qui est directement connecté au circuit limitation pour bloquer la régulation lors d'une telle action de communication.

L'invention concerne en outre une radio-étiquette de communication comprenant un bloc commande comprenant une unité de calcul et une mémoire pour opérer au moins une fonction, et au moins un bloc récepteur agencé pour recevoir ou envoyer un signal et pour alimenter en énergie ledit bloc de commande, caractérisé en ce que ledit bloc récepteur est un bloc récepteur selon l'une des revendications précédentes.

Dans un premier mode de réalisation avantageux, le bloc récepteur est agencé pour fonctionner selon un premier protocole utilisant une première fréquence.

Dans un second mode de réalisation avantageux, le premier protocole est un protocole longue distance.

Dans un troisième mode de réalisation avantageux, la radio-étiquette comporte en outre un second bloc récepteur qui est agencé pour fonctionner selon un second protocole utilisant une seconde fréquence, ledit second bloc récepteur comprenant un étage de communication et un étage d'alimentation permettant de fournir un courant pour un bloc, ledit bloc commande recevant un courant dont la valeur est la somme des courants venant du premier bloc récepteur et du second bloc récepteur.

Dans un autre mode de réalisation avantageux, le premier bloc récepteur comprend en outre un circuit miroir utilisé pour fournir un signal représentatif d'un courant qui est l'image de la somme des courants des premiers et seconds blocs récepteurs, le second bloc récepteur comprenant en outre un circuit miroir utilisé pour fournir un signal représentatif d'un courant qui est l'image du courant fourni par le second bloc récepteur et en ce que le premier bloc récepteur comprend en outre un circuit soustracteur pour soustraire le courant du courant et fournir, au circuit limiteur, un signal uniquement représentatif du courant du premier bloc récepteur.

## BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :

- Les figures 1 a et 1b représentent schématiquement la radio-étiquette et le bloc récepteur selon un premier mode de réalisation de la présente invention ;

- La figure 2 représente schématiquement un convertisseur AC/DC du bloc récepteur selon la présente invention ;

- La figure 3 représente schématiquement un régulateur de tension de shunt du bloc récepteur selon la présente invention ;

- La figure 4 représente schématiquement un circuit limiteur du bloc récepteur selon la présente invention ;

- La figure 5 représente schématiquement une variante du bloc récepteur selon la présente invention ;

- Les figures 6 et 7 représentent schématiquement une radio-étiquette selon un second mode de réalisation de la présente invention ;

- La figure 8 représente schématiquement le comportement temporel du système de régulation de la radio-étiquette selon l'invention.

## DESCRIPTION DETAILLEE

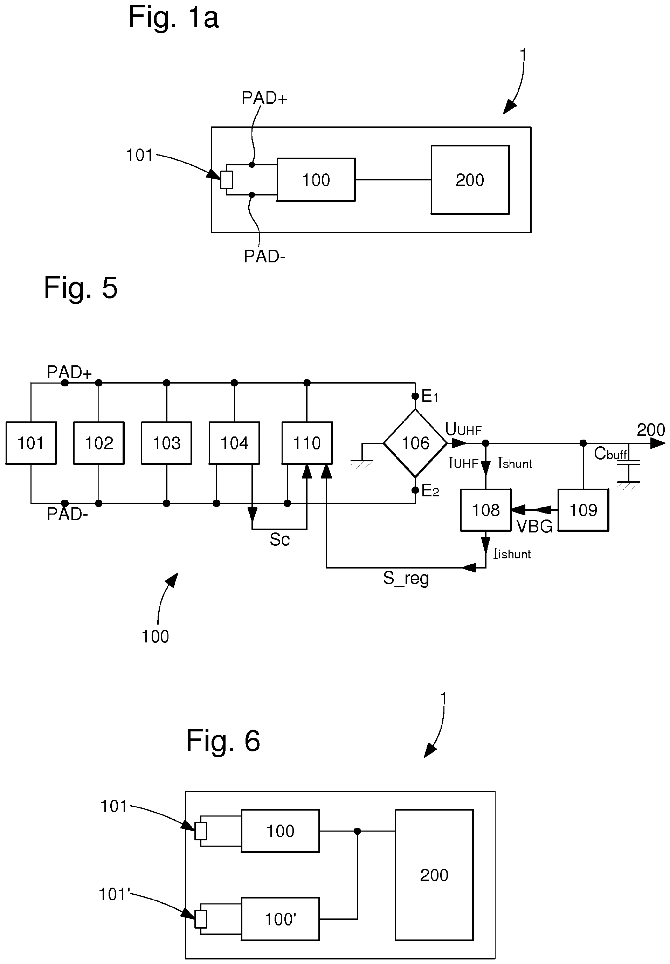

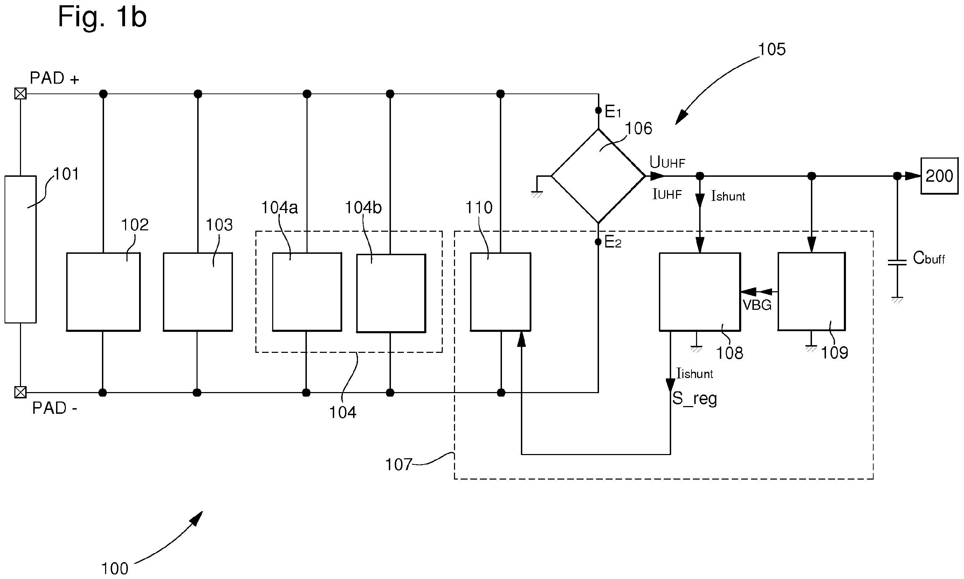

La figure 1 a représenté un bloc récepteur 1 d'une radio-étiquette appelé aussi balise de communication ou étiquette électronique et plus précisément un bloc récepteur 100 selon un premier mode de réalisation. Un tel bloc récepteur 100, visible à la figure 1b, d'une telle radio-étiquette est connecté, en entrée, à une antenne 101 via deux bornes d'entrée (PAD+, PAD-) soit une borne positive et une borne négative. Cette antenne 101 peut être un dipôle ou une bobine ou tout élément pouvant opérer la fonction d'antenne. La radio-étiquette 1 comprend en outre un bloc commande 200 comprenant par exemple une unité de calcul et une mémoire pour opérer au moins une fonction. Ici, le bloc récepteur 100 est utilisé pour fonctionner avec un protocole longue portée UHF. Sur ces deux bornes d'entrée PAD+, PAD-, une pluralité d'étages viennent se connecter, chaque étage étant connecté par une de ses bornes à la borne positive et par une autre de ses bornes à la borne négative. En premier lieu, il y a un étage d'ajustement 102 comprenant une multitude de condensateurs montés en parallèle et activables de sorte à pouvoir les additionner ou non pour ajuster l'adaptation avec l'antenne, la fréquence de résonnance et le facteur de qualité. Un second étage 103 consiste en un étage de protection. Un tel étage de protection appelé ESD protège des décharges électrostatiques. Un tel étage de protection 103 est généralement muni de diodes et/ou de thyristors. Un troisième étage consiste en un étage de communication 104. Un tel étage de communication consiste en une partie modulateur 104a permettant d'envoyer un signal via l'antenne et/ou en une partie démodulateur 104b qui permet de traiter le signal reçu via l'antenne.

Un quatrième étage consiste en l'étage d'alimentation 105 c'est-à-dire l'étage qui permet, en utilisant la puissance du signal reçu, à fournir de l'énergie électrique pour le reste de la radio-étiquette.

Ce quatrième étage comprend un convertisseur de tension 106 permettant de transformer une tension d'entrée en une tension de sortie différente. Dans le cas présent, il s'agit d'une transformation AC/DC. Un tel circuit fournit une tension redressée Uuhf et un courant Iuhf à partir d'une tension alternative.

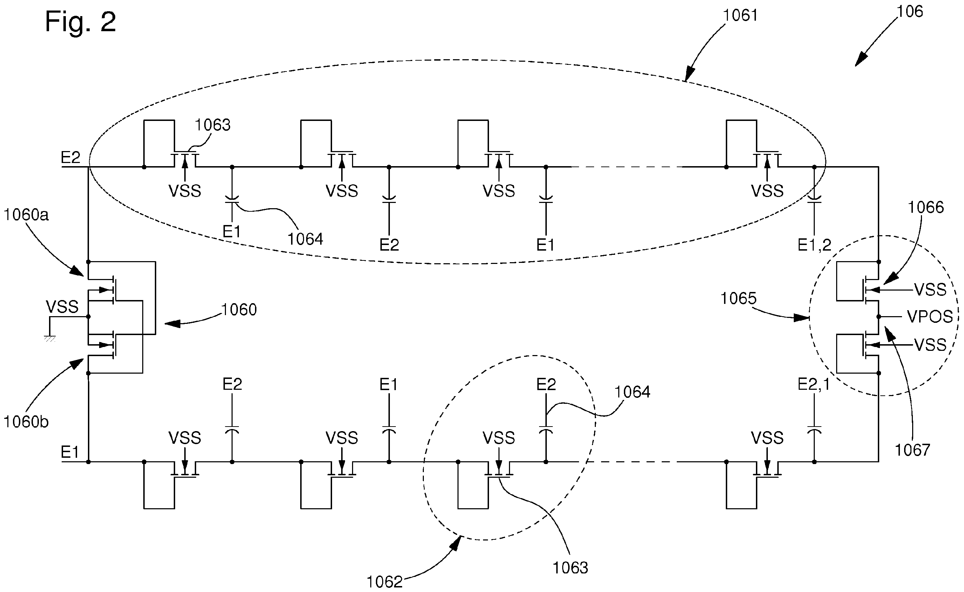

Dans un exemple préférentiel, le convertisseur de tension 106 est un convertisseur AC/DC utilisant une structure de type Cockcroft-Walton qui est modifiée et symétrique comme visible à la figure 2. Un tel convertisseur AC/DC 106 comprend deux bornes d'entrée E1, E2 qui sont reliées aux deux bornes d'entrée PAD+, PAD- de la radio-étiquette. En entrée, entre les deux entrées E1, E2, un générateur de masse 1060 est agencé, ce générateur de masse étant composé de deux transistors MOS de type N, 1060a et 1060b. Les sources des deux transistors 1060a et 1060b sont reliées ensemble pour former la masse VSS alors que la grille de chaque transistor 1060a et 1060b est connectée au drain de l'autre transistor chaque drain étant relié à une des bornes E1, E2.

La structure comprend ensuite une partie élévatrice 1061. A partir de chaque borne d'entrée E1, E2, des structures identiques 1062 sont connectées en série. Ces structures 1062 s'étendant depuis chaque borne E1, E2 sont agencées de sorte que la première structure 1062 s'étendant depuis la borne E1 et la première structure s'étendant depuis la borne E2 forment un étage modificateur de tension, et ainsi de suite. Le convertisseur de tension 106 du type AC/DC comprend ainsi N étages modificateur de tension.

Chaque structure 1062 comprend un transistor MOS de type N 1063 dont la grille est connectée au drain dudit transistor. Le transistor 1063 voit également sa source connectée au drain du transistor 1063 de la structure 1062 suivante mais également à un condensateur 1064 monté en parallèle, ce dernier est utilisé pour fournir un surplus de puissance lors de l'élévation et est également connecté à une des bornes d'entrée E1, E2.

La connexion du condensateur 1064 aux bornes d'entrée E1, E2 est alternée de sorte que si le condensateur 1064 d'une structure 1062 est connecté à la borne E1 alors le condensateur 1064 de la structure 1062 suivante est connecté à la borne E2 et ainsi de suite.

Cette configuration est également agencée pour que la première structure 1062 dont le drain du transistor 1063 est connecté à la borne E1 voit son condensateur 1064 relié à la borne E2 alors que la première structure 1062 dont le drain du transistor 1063 est connecté à la borne E2 voit son condensateur 1064 relié à la borne E1.

Au niveau de la dernière structure 1062 de chaque ligne, la source du transistor 1063 est connectée à une partie appelée collecteur 1065. Ce collecteur comprend deux transistors MOS de type N 1066, les sources des transistors 1066 étant connectées entres elles pour former la sortie VPOS 1067. Les drains des transistors 1066 sont connectés, pour l'un, à la source du transistor 1066 de la dernière structure de la ligne E1 et, pour l'autre à la source du transistor de la dernière structure de la ligne E2. De plus, chaque transistor 1066 voit sa grille connectée à sa source.

Cette configuration permet d'avoir un convertisseur AC/DC 106 ayant une faible capacité parasite ce qui est une caractéristique recherchée pour la présente invention.

En sortie de ce convertisseur AC/DC 106, le quatrième étage 105 comprend avantageusement un circuit de régulation 107. Ce circuit de régulation 107 est utilisé pour éviter une destruction des transistors du convertisseur AC/DC 106 lors de l'élévation de tension.

En effet, le circuit convertisseur AC/DC 106 est également un circuit élévateur. Toutefois, les composants sont susceptibles d'être endommager quand la tension devient trop forte.

Le circuit de régulation 107 comprend en premier lieu un circuit régulateur comme un régulateur de tension de shunt 108 connecté par une de ses entrées à la sortie du convertisseur AC/DC et par une de ses sorties à la masse.

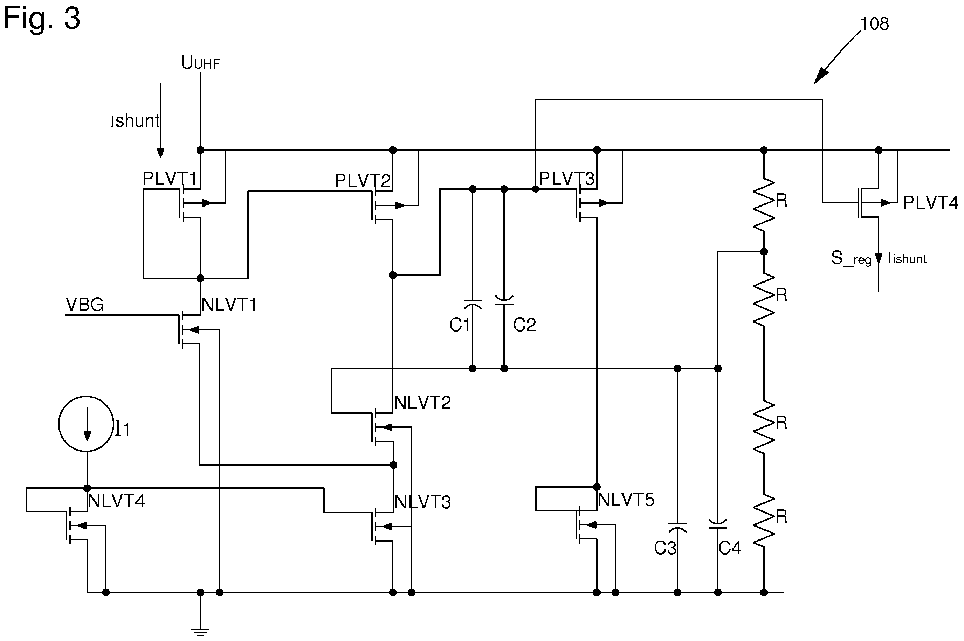

Un tel régulateur de tension de shunt 108, visible à la figure 3, comprend une première entrée connectée au drain de trois transistors MOS de type P PVLT1, PLVT2 et PLVT3. La grille du transistor PLVT1 est connectée à la source de ce dernier et à la grille du transistor PLVT2. Le transistor PLVT2 voit sa source connectée à la grille du transistor PLVT3. A la première entrée est également connectée une série de quatre résistances R, ces résistances R étant connectées en série entre elles et sont donc connectées entre la première entrée et la masse.

Ce régulateur de tension de shunt 108 comprend en outre un premier transistor MOS de type N NVLT1 dont la grille est une seconde entrée pour y connecter une tension de référence VBG. Le drain de ce transistor NVLT1 est connecté à la source du transistor PLVT1 alors que la source du transistor NLVT1 est connectée à un couple de transistors MOS de type N NLVT2 et NLVT3. Plus particulièrement, la source du transistor NLVT1 est connectée à la source du transistor NLVT2, ce dernier voyant son drain connecté à la source du transistor PLVT2 et sa grille étant connectée au point de connexion entre la première et la seconde résistance R de la série de résistances. Par ailleurs, il est prévu que des condensateurs C1, C2, C3 et C4 soient connectés en parallèle entre la grille du transistor PLVT3 et la grille du transistor NLVT2 et entre la grille du transistor NLVT2 et la masse.

La source du transistor NLVT1 est connectée également au drain du transistor NLVT3, ce dernier voit sa source connectée à la masse et sa grille connectée à la grille d'un quatrième transistor NLVT4. Ce transistor NLVT4 est connecté par son drain et sa grille à une source de courant I1 de polarisation et par sa source à la masse.

Enfin, le régulateur de tension de shunt comprend un cinquième transistor NLVT5 dont la grille et le drain sont connectés à la source du transistor PLVT3 et dont la source est connectée à la masse. Ce régulateur de tension de shunt 108 peut être associé à un générateur de tension de référence de bandgap 109 fournissant une tension de référence VBG et connecté à la grille du transistor NLVT1 du régulateur de tension de shunt 108.

Un tel régulateur de tension de shunt 108 est utilisé pour mesurer le courant $I_{shunt}$ fourni en plus du courant consommé par le bloc de commande 200. En effet, le principe de régulation repose sur le fait que le courant fourni par le convertisseur AC/DC 106 est absorbé, en partie, par le circuit de la radio-étiquette c'est-à-dire la partie commande 200, le surplus c'est-à-dire le courant $I_{shunt}$ étant dirigé vers le régulateur de tension de shunt 108.

Le courant de régulation du régulateur shunt est écoulé principalement dans PLVT3. Le transistor MOS PLVT4 permet de prendre une image $I_{ishunt}$ de ce courant de shunt $I_{shunt}$ pour ajuster les caractéristiques du circuit de protection du convertisseur AC/DC.

Donc, il existe une corrélation entre le courant en sortie et la tension d'entrée du convertisseur AC/DC 106 de sorte qu'il existe une tension d'entrée limite du convertisseur AC/DC 106 pour laquelle l'élévation n'entraîne pas de destruction. Dès lors, cette valeur de courant limite est utilisée comme outil de régulation. Dans un exemple, cette valeur de courant limite sera fixée à $100\mu A$, le courant consommé par le bloc de commande 200 étant de l'ordre de $10\mu A$. Le régulateur de tension de shunt 108 est utilisé pour fournir un signal de régulation S_reg qui est fonction du courant de sortie du convertisseur AC/DC 108.

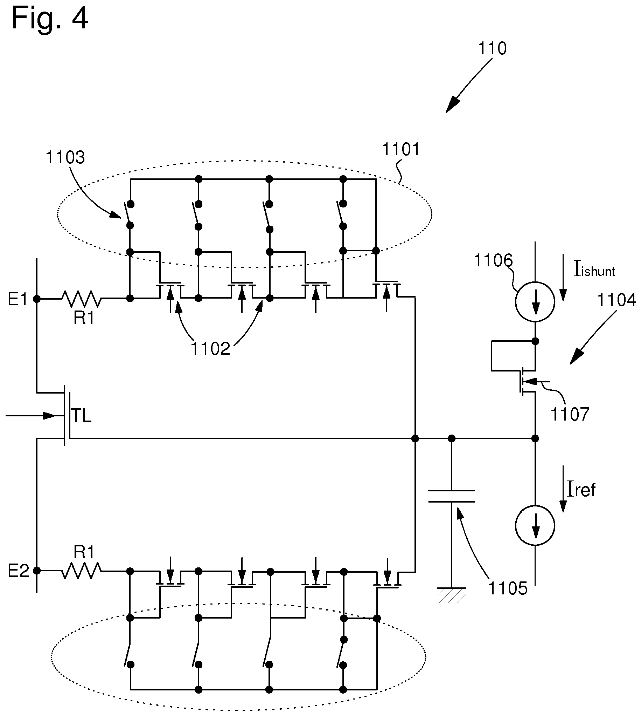

Ce signal de régulation S_reg ayant une valeur de courant est envoyé vers un étage de pincement ou de limitation 110 visible à la figure 4. Cet étage de limitation 110 est connecté en parallèle entre les bornes PAD+, PAD- juste avant le convertisseur AC/DC 108. Un tel étage de limitation 110 comprend au moins un transistor de limitation TL connecté entre les bornes E1 et E2 reliées aux bornes d'entrées PAD+, PAD-.

A partir de chaque borne d'entrée PAD+, PAD-, s'étend une résistance R1 connectée en série avec une structure de commutation 1101, cette structure de commutation 1101 comprend quatre transistors MOS 1102 de type N connectés de sorte que le premier transistor est connecté à la résistance R1 via son drain et au second transistor 1102 via sa source et ainsi de suite.

De plus, chaque structure de commutation 1101 comprend un nombre de commutateurs 1103 égal au nombre de transistors, les commutateurs 1103 étant connectés ensemble via une de leurs bornes et chacun connecté à un drain et une grille d'un transistor 1102 via l'autre borne. Ces structures de commutation 1101 sont utilisées pour créer un chemin dit rapide pour contrôler la grille du transistor TL si par exemple une surtension apparaît sur les entrées PAD+, PAD-. Ce chemin rapide permet d'avoir une sorte de seconde protection ESD.

Les derniers transistors 1102 de chaque structure 1101 sont connectés ensembles. Au niveau de ce point de connexion, une connexion est faite avec la grille du transistor de limitation TL mais aussi vers un module d'entrée 1104, ce dernier comprend un condensateur 1105 monté en parallèle ainsi que deux sources de courant 1106a. Une première source de courant 1106 est agencée pour fournir le courant du signal de sortie S_reg du régulateur de tension de shunt c'est-à-dire l'image $I_{ishunt}$ de ce courant de shunt $I_{shunt}$. En sortie de cette source de courant, le drain d'un transistor MOS de type N 1107 est connecté, sa grille étant connectée à son drain. Le transistor 1107 est également connecté, via sa source, à une seconde source de courant 1106b dont la valeur est une valeur de référence Iref fournie par le générateur de tension de référence de bandgap 109.

Cet étage de limitation 110 est utilisé pour limiter la tension entrante dans le convertisseur AC/DC 106 du quatrième étage en agissant sur la grille du transistor de limitation TL.

Tant que le courant envoyé $I_{ishunt}$ du signal S_reg envoyé du régulateur de tension de shunt 108 est inférieur ou égale au courant de référence Iref, alors rien ne se passe et le transistor TL n'est pas commandé.

Au contraire, si le courant $I_{ishunt}$ envoyé devient supérieur au courant de référence Iref, alors il n'y a plus équilibre entre les deux sources de courant 1106 et le surplus de courant est envoyé vers la grille du transistor de limitation TL. Cet afflux de courant vers la grille du transistor de limitation TL implique sa fermeture et donc le transistor de limitation TL devient moins passant, entraînant une baisse de la tension entrant dans le convertisseur AC/DC 106. Ainsi, le courant fourni par le convertisseur AC/DC 106 diminue de sorte que le courant $I_{ishunt}$ du signal de commande S_reg envoyé par le régulateur de tension de shunt 108 diminue et agit plus ou moins sur le transistor de limitation TL.

Un avantage de l'étage de limitation 110 est d'être linéaire c'est-à-dire qu'il n'écrête pas ou qu'il ne distord pas le signal d'entrée, il ne fait qu'une homothétie dudit signal.

Un autre avantage de cet étage de limitation 110 est qu'il à un effet régulateur sur la tension au niveau des bornes d'entrée PAD+, PAD- en gardant la tension au niveau de ces bornes d'entrée PAD+, PAD- dans une gamme de tension compatible avec le bon fonctionnement de ladite étiquette électronique alors que le second étage 103 appelé étage de protection muni de diodes de protection ne le permet pas. Par exemple, en utilisant uniquement des diodes de protection, la tension en entrée d'un convertisseur AC/DC à 5 étages pourrait atteindre 2 Volts, ce qui engendrait, avec un rapport multiplicatif environ égal à 4, une tension de 8 Volts aux bornes des transistors du convertisseur d'où un risque de destruction de ces transistors qui d'ordinaire fonctionnent à environ 2 Volts.

La gamme de puissance permise par cet étage de limitation 110 va de -20dBm à +25dBm pour une tension en entrée du bloc de commande 200 allant de quelques dizaines millivolts à plusieurs dizaines de volts.

La régulation telle que proposée utilise une fonction de transfert pour son fonctionnement. Cette fonction de transfert est la fonction suivante :

$$H = \frac{V_{ant}}{e_g} = \frac{\tau_c \times S/(1+\tau_r \times S)}{(1+\tau_c \times S) \times (1 + \left(\frac{\tau_r}{\tau_c}\right) + \tau_r \times S)}$$

Avec $\tau_c$ : constante de temps due aux composants du limiteur 110 et de la capacité 1105,

Avec $\tau_r$ : constante de temps due aux composants du circuit de régulation et de la capacité buffer Cbuff,

Avec eg qui est l'amplitude de tension induite interne à l'antenne liée à l'énergie reçue et disponible par le champ du signal reçu et $V_{ant}$ qui est l'amplitude de tension effective de l'antenne au niveau des bornes d'entrées PAD+, PAD- contrôlée par le circuit limiteur 110 pour maintenir une tension raisonnable au niveau du convertisseur AC/DC 106.

Comme $\tau_r \ll \tau_c$, avec $\tau_c, \approx 1.7\ \mu s$ et $\tau_r = 5ns$, la fonction de transfert devient :

$$H \approx \frac{\tau_c.s}{1 + \tau_c.s}$$

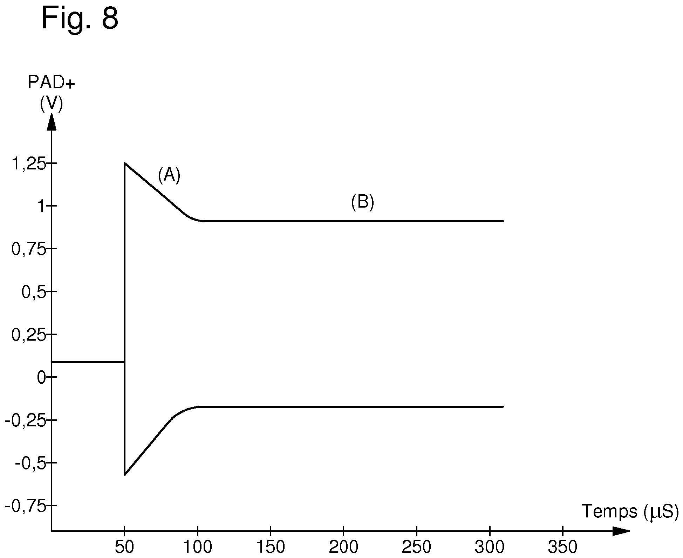

Cette fonction de transfert permet d'obtenir une fonction du premier ordre qui est stable comme visible à la figure 8 dans laquelle une grande amplitude d'oscillations (A) au démarrage se stabilise dans le temps pour obtenir un régime stable (B).

Dans une variante, le transistor de limitation TL consiste en une pluralité de transistors connectés en parallèle.

Dans une autre variante visible à la figure 5, le troisième étage ou étage de communication 104 est utilisé pour la régulation. Cette variante permet de prendre en compte les variations de tension liées à la démodulation lorsqu'un signal est reçu. En effet, il se peut que, lors du traitement du signal, une variation de tension amenant une baisse de sa valeur soit détectée par le régulateur de tension de shunt et considérée comme un manque de tension. Le régulateur de tension de shunt 108 pourrait alors commander au transistor de limitation TL de s'ouvrir de sorte à laisser passer plus de tension vers le convertisseur AC/DC. Néanmoins, cette baisse de tension n'est que passagère et pourrait entraîner une hausse de tension dans le convertisseur AC/DC et l'endommager.

Pour cela, un signal Sc venant du troisième étage 104 représentatif d'une action de communication est connecté au circuit de limitation 110 pour bloquer la régulation lors d'une telle action de communication.

La présente variante prévoit donc avantageusement de prendre en compte ses variations de tensions de sorte que lors de la réception d'un signal par l'antenne, la régulation est shuntée de sorte à éviter que celle-ci ne s'enclenche notamment en cas de baisse de tension du signal modulé.

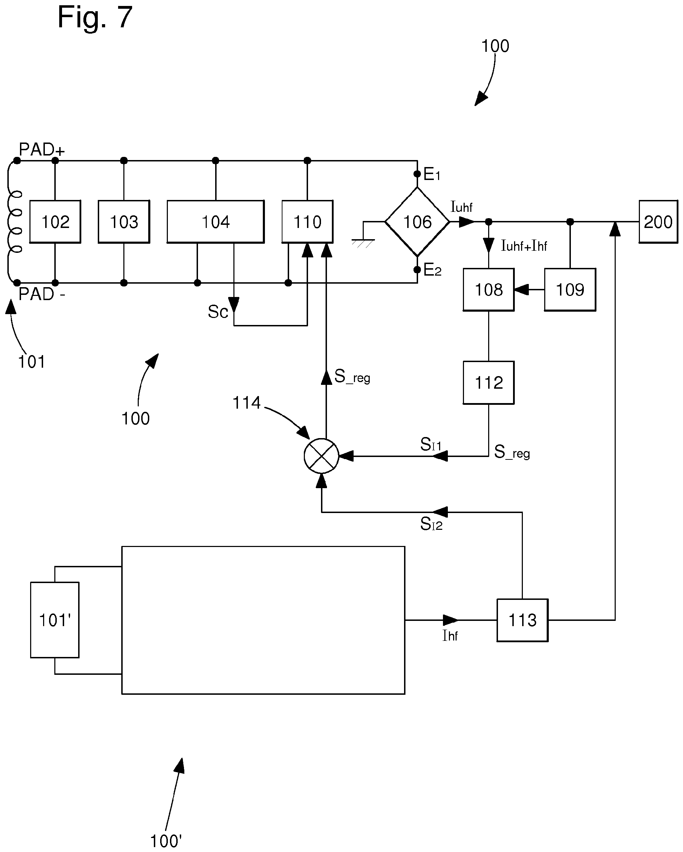

Dans un second mode de réalisation visible à la figure 7, il est concevable que la radio-étiquette soit une radio-étiquette double fréquence. Une telle radio-étiquette comprend ainsi deux blocs récepteurs 100, 100', un premier bloc 100 fonctionnant selon un premier protocole (P1) sous une première fréquence (F1) et le deuxième bloc 100', connecté à une antenne 101', fonctionnant selon un second protocole (P2) avec une seconde fréquence (F2) comme visible à la figure 6. Par exemple, un premier bloc récepteur 100 fonctionne en UHF c'est à dire avec un protocole longue distance alors que le second bloc récepteur 100' fonctionne en HF c'est-à-dire avec un protocole courte distance.

Dans ce cas-là, c'est le bloc récepteur UHF qui fournit le courant Iuhf pour le bloc commande de la radio-étiquette. Or, le bloc récepteur HF fournit également du courant Ihf de sorte que le bloc commande 200 est relié à la fois au bloc récepteur UHF et au bloc récepteur HF de sorte que le courant reçu par le bloc commande 200 est la somme des courants Iuhf et Ihf c'est-à-dire le courant Ihf+Iuhf.

Par conséquent, il devient nécessaire d'ajuster le courant provenant du second bloc récepteur 100' soit pris en compte pour la régulation de sorte à ne pas la fausser.

La boucle de régulation 107 comprend en outre un circuit miroir 112 étant utilisé pour fournir un signal $S_{I1}$ représentatif d'un courant I1 qui est l'image du courant dont la valeur est la somme des courants Iuhf et Ihf.

Le second bloc récepteur 100' comprend en outre un circuit miroir 113 utilisé pour fournir un signal $S_{I2}$ représentatif d'un courant I2 qui est l'image du courant Ihf.

Le signal $S_{I1}$ représentatif du courant I1, image des courants Iuhf+Ihf et le signal $S_{I2}$ représentatif du courant I2, image du courant Ihf, sont alors envoyés vers un soustracteur 114 qui est connecté au circuit limiteur 110. Le courant I1 et le courant I2 sont connectés au soustracteur 114 de sorte que ce dernier opère la différence entre I1 et I2 c'est-à-dire l'opération suivante : Iuhf+Ihf-Ihf.

Le résultat est un signal S _reg représentatif du courant Iuhf utilisé pour la régulation au niveau du circuit limiteur 110.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Bien entendu, le premier bloc récepteur 100 et le second bloc récepteur 100' peuvent avoir une structure identique ou différente. De même, il peut être prévu que le second bloc récepteur 100' comprend une boucle de régulation telle que celle décrite pour le premier bloc récepteur 100.

## Revendications

1. Bloc récepteur d'une radio-étiquette comprenant une première et une seconde borne d'entrée (PAD+, PAD-) auxquelles sont connectés une antenne, un étage de communication apte à démoduler et/ou moduler un signal entrant dans ledit étage de communication et un étage d'alimentation (105) comprenant un convertisseur de tension (106) permettant de fournir l'alimentation en puissance pour un bloc (200) par une première valeur de courant, l'étage d'alimentation comprenant en outre un circuit de régulation (107) apte à limiter la tension en sortie du convertisseur de tension, **caractérisé en ce que** ledit circuit de régulation (107) comprend un circuit régulateur (108) apte à déterminer une seconde valeur du courant, cette seconde valeur étant la valeur de courant ($I_{shunt}$) fournie additionnement à la première valeur de courant, le circuit régulateur (108) fournissant un signal de commande (S_reg) si cette seconde valeur de courant dépasse une valeur seuil prédéterminée (Iref), le signal de commande étant envoyé vers un circuit de limitation (110) agencé pour limiter la tension en entrée du circuit convertisseur.

2. Bloc récepteur d'une radio-étiquette selon la revendication 1, **caractérisé en ce que** le convertisseur de tension est du type alternatif/continu.

3. Bloc récepteur d'une radio-étiquette selon la revendication 2, **caractérisé en ce que** le convertisseur de tension (106) comprend, en entrée, un générateur de masse (1060) composée d'un premier et d'un second transistor MOS de type N (1060a, 1060b) connectés ensemble de sorte que leurs sources sont reliées ensemble pour former la masse du convertisseur de tension, le drain du premier transistor étant connecté à la première borne d'entrée (PAD+) et à la grille du second transistor alors que le drain du second transistor étant connecté à la seconde borne d'entrée (PAD-) et à la grille du premier transistor, le convertisseur de tension comprenant en outre, une pluralité de structures (1062) identiques formant une partie modificatrice de tension (1061), et **en ce que** ledit convertisseur comprend en sortie deux transistors MOS de type N (1066) dont les sources des transistors sont connectées entres elles pour former la ligne de sortie, les drain des transistors étant connectés à la dernière structure de la partie modificatrice de tension s'étendant depuis la première borne et, pour l'autre, à la dernière structure de la partie modificatrice de tension s'étendant depuis la seconde borne, chaque transistor ayant sa grille connectée à sa source.

4. Bloc récepteur d'une radio-étiquette selon la revendication 3, **caractérisé en ce que** la partie modificatrice de tension (1061) est agencée de sorte qu'à partir de chacune des premières et secondes bornes d'entrée (E1, E2) s'étend une série de structure identique (1062) connectée entres elles, la première structure de chaque série étant connectée à l'une des premières et secondes bornes d'entrée (E1, E2) et à la structure suivante, le point de connexion entre deux structures étant connecté à l'une des premières ou secondes bornes d'entrée (E1, E2) de sorte que chaque structure est connectée à la première borne et à la seconde borne.

5. Bloc récepteur selon l'une des revendications précédentes, **caractérisé en ce que** le circuit limiteur (110) comprend au moins un transistor (TL) connecté par son drain à première borne d'entrée (E1) et par sa source à la seconde borne d'entrée (E2), le signal de commande (S_reg) étant envoyé à sa grille afin de rendre ledit transistor plus ou moins passant.

6. Bloc récepteur selon la revendication 5, **caractérisé en ce que** le circuit limiteur (110) comprend une pluralité de transistors montés en parallèle.

7. Bloc récepteur selon l'une des revendications précédentes, **caractérisé en ce que** le bloc régulation (107) comprend en outre un générateur de tension de bandgap (109) pour fournir la tension de référence (VBG) et les courants de polarisation du régulateur de tension de shunt.

8. Bloc récepteur selon l'une des revendications précédentes, **caractérisé en ce que** l'étage de communication (104) est apte à fournir un signal (Sc) représentatif d'une action de communication qui est directement connecté au circuit limitation (110) pour bloquer la régulation lors d'une telle action de communication.

9. Radio-étiquette de communication (1) comprenant un bloc commande (200) comprenant une unité de calcul et une mémoire pour opérer au moins une fonction, et au moins un bloc récepteur agencé pour recevoir ou envoyer un signal et pour alimenter en énergie ledit bloc de commande, **caractérisé en ce que** ledit bloc récepteur est un bloc récepteur (100) selon l'une des revendications précédentes.

10. Radio-étiquette selon la revendication 9, **caractérisé en ce que** le bloc récepteur (100) est agencé pour fonctionner selon un premier protocole (P1) utilisant une première fréquence (F1).

**11.** Radio-étiquette selon la revendication 10, **caractérisé en ce que** le premier protocole (P1) est un protocole longue distance.

**12.** Radio-étiquette selon l'une des revendications 9 à 11, **caractérisé en ce qu'**elle comporte en outre un second bloc récepteur (100') est agencé pour fonctionner selon un second protocole (P2) utilisant une seconde fréquence (F2), ledit second bloc récepteur étant agencé pour fournir un courant (Ihf) pour un bloc (200), ledit bloc commande recevant un courant (Ihf+uhf) dont la valeur est la somme des courants (Iuhf, Ihf) venant du premier bloc récepteur (100) et du second bloc récepteur (100').

**13.** Radio-étiquette selon la revendication 12, **caractérisé en ce que** le premier bloc récepteur comprend en outre un circuit miroir (112) utilisé pour fournir un signal ($S_{l1}$) représentatif d'un courant (I1) qui est l'image de la somme des courants des premiers et seconds blocs récepteurs, le second bloc récepteur (100') comprenant en outre un circuit miroir (113) utilisé pour fournir un signal ($S_{l2}$) représentatif d'un courant (I2) qui est l'image du courant (Ihf) fourni par le second bloc récepteur (100') et **en ce que** le premier bloc récepteur comprend en outre un circuit soustracteur (114) pour soustraire le courant (I2) du courant (I1) et fournir, au circuit limiteur (110), un signal uniquement représentatif du courant (Iuhf) du premier bloc récepteur.

**Patentansprüche**

**1.** Empfängerblock eines Funktags, umfassend einen ersten und einen zweiten Eingangsanschluss (PAD+, PAD-), an die eine Antenne angeschlossen ist, eine Kommunikationsstufe, die fähig ist, ein Eingangssignal der Kommunikationsstufe zu demodulieren und/oder zu modulieren, und eine Versorgungsstufe (105), die einen Spannungsumsetzer (106) enthält, der ein Bereitstellen der Leistungsversorgung für einen Block (200) mit einem ersten Stromstärkewert ermöglicht, wobei die Versorgungsstufe ferner eine Regelschaltung (107) umfasst, die fähig ist, die Ausgangsspannung des Spannungsumsetzers zu begrenzen, **dadurch gekennzeichnet, dass** die Regelschaltung (107) eine Reglerschaltung (108) umfasst, die fähig ist, einen zweiten Stromstärkewert zu bestimmen, wobei dieser zweite Wert der Stromstärkewert ($I_{shunt}$) ist, der zusätzlich zu dem ersten Stromstärkewert geliefert wird, wobei die Reglerschaltung (108) ein Steuersignal (S_reg) liefert, falls dieser zweite Stromstärkewert einen vorgegebenen Schwellenwert (Iref) überschreitet, wobei das Steuersignal zu einer Begrenzungsschaltung (110) gesendet wird, die dafür ausgelegt ist, die Spannung am Eingang der Umsetzerschaltung zu begrenzen.

**2.** Empfängerblock eines Funktags nach Anspruch 1, **dadurch gekennzeichnet, dass** der Spannungsumsetzer vom Wechselspannungs-/Gleichspannungstyp ist.

**3.** Empfängerblock eines Funktags nach Anspruch 2, **dadurch gekennzeichnet, dass** der Spannungsumsetzer (106) am Eingang einen Massegenerator (1060) umfasst, der aus einem ersten und einem zweiten MOS-Transistor (1060a, 1060b) des N-Typs gebildet ist, die miteinander in einer Weise verbunden sind, dass ihre Sources miteinander verbunden sind, um die Masse des Spannungsumsetzers zu bilden, wobei der Drain des ersten Transistors mit dem ersten Eingangsanschluss (PAD+) und mit dem Gate des zweiten Transistors verbunden ist, während der Drain des zweiten Transistors mit dem zweiten Eingangsanschluss (PAD-) und mit dem Gate des ersten Transistors verbunden ist, wobei der Spannungsumsetzer ferner eine Mehrzahl von gleichen Strukturen (1062) umfasst, die einen Spannungsmodifikationsabschnitt (1061) bilden, und dass der Umsetzer am Ausgang zwei MOS-Transistoren (1066) des N-Typs umfasst, deren Sources miteinander verbunden sind, um die Ausgangsleitung zu bilden, wobei die Drains der Transistoren mit der letzten Struktur des Spannungsmodifikationsabschnitts, der sich von dem ersten Anschluss erstreckt, und zum anderen mit der letzten Struktur des Spannungsmodifikationsabschnitts, der sich von dem zweiten Anschluss erstreckt, verbunden ist, wobei jeder Transistor mit seinem Gate mit seiner Source verbunden ist.

**4.** Empfängerblock eines Funktags nach Anspruch 3, **dadurch gekennzeichnet, dass** der Spannungsmodifikationsabschnitt (1061) so beschaffen ist, dass sich ausgehend von jedem des ersten und des zweiten Eingangsanschlusses (E1, E2) eine Reihe (1062) von gleichen Strukturen erstreckt, die miteinander verbunden sind, wobei die erste Struktur jeder Reihe mit einem des ersten und des zweiten Eingangsanschlusses (E1, E2) und mit der folgenden Struktur verbunden ist, wobei der Verbindungspunkt zwischen zwei Strukturen mit einem des ersten oder des zweiten Eingangsanschlusses (E1, E2) verbunden ist, derart, dass jede Struktur mit dem ersten Anschluss und mit dem zweiten Anschluss verbunden ist.

**5.** Empfängerblock nach einem der vorhergehenden Ansprüche, **dadurch gekennzeichnet, dass** die Begrenzerschaltung (110) mindestens einen Transistor (TL) umfasst, der mit seinem Drain mit dem ersten Eingangsanschluss (E1) und mit seiner Source mit dem zweiten Eingangsanschluss (E2) verbunden ist, wobei das Steuersignal (S_reg) an sein Gate geschickt wird, um den Transistor mehr oder weniger leitend zu machen.

6. Empfängerblock nach Anspruch 5, **dadurch gekennzeichnet, dass** die Begrenzerschaltung (110) mehrere Transistoren enthält, die parallelgeschaltet sind.

7. Empfängerblock nach einem der vorhergehenden Ansprüche, **dadurch gekennzeichnet, dass** der Regulierungsblock (107) ferner einen Bandgap-Spannungsgenerator (109) umfasst, um die Referenzspannung (VBG) und die Vorströme des Shunt-Spannungsreglers zu liefern.

8. Empfängerblock nach einem der vorhergehenden Ansprüche, **dadurch gekennzeichnet, dass** die Kommunikationsstufe (104) fähig ist, ein Signal (Sc), das einen Kommunikationsvorgang darstellt, zu liefern und direkt mit der Begrenzungsschaltung (110) verbunden ist, um die Regulierung bei einem solchen Kommunikationsvorgang zu sperren.

9. Kommunikationsfunktag (1), umfassend einen Steuerblock (200), der eine Recheneinheit und einen Speicher enthält, um mindestens eine Funktion abzuarbeiten, und mindestens einen Empfängerblock, der dafür ausgelegt ist, ein Signal zu empfangen oder zu senden und den Steuerblock mit Energie zu versorgen, **dadurch gekennzeichnet, dass** der Empfängerblock ein Empfängerblock (100) nach einem der vorhergehenden Ansprüche ist.

10. Funktag nach Anspruch 9, **dadurch gekennzeichnet, dass** der Empfängerblock (100) dafür ausgelegt ist, gemäß einem ersten Protokoll (P1) zu arbeiten, das eine erste Frequenz (F1) verwendet.

11. Funktag nach Anspruch 10, **dadurch gekennzeichnet, dass** das erste Protokoll (P1) ein Weitbereichsprotokoll ist.

12. Funktag nach einem der Ansprüche 9 bis 11, **dadurch gekennzeichnet, dass** er ferner einen zweiten Empfängerblock (100') umfasst, der dafür ausgelegt ist, gemäß einem zweiten Protokoll (P2) zu arbeiten, das eine zweite Frequenz (F2) verwendet, wobei der zweite Empfängerblock dafür ausgelegt ist, einen Strom (Ihf) für einen Block (200) zu liefern, und der Steuerblock einen Strom (Ihf + uhf) empfängt, dessen Wert die Summe der Ströme (Iuhf, Ihf) ist, die von dem ersten Empfängerblock (100) und von dem zweiten Empfängerblock (100') stammen.

13. Funktag nach Anspruch 12, **dadurch gekennzeichnet, dass** der erste Empfängerblock ferner eine erste Spiegelschaltung (112) umfasst, die verwendet wird, um ein Signal ($S_{I1}$) zu liefern, das einen Strom (I1) repräsentiert, der das Bild der Summe der Ströme des ersten und des zweiten Empfängerblocks ist, wobei der zweite Empfängerblock (100') ferner eine Spiegelschaltung (113) umfasst, die verwendet wird, um ein Signal ($S_{I2}$) zu liefern, das einen Strom (I2) repräsentiert, der das Bild des Stroms (Ihf) ist, der von dem zweiten Empfängerblock (100') geliefert wird, und dass der erste Empfängerblock ferner eine Subtraktionsschaltung (114) umfasst, um den Strom (I2) von dem Strom (I1) zu subtrahieren und an die Begrenzerschaltung (110) ein Signal zu liefern, das ausschließlich den Strom (Iuhf) des ersten Empfängerblocks repräsentiert.

**Claims**

1. Receiver unit for an RF tag comprising a first and a second input terminals (PAD+, PAD-) to which are connected an antenna, a communication stage adapted to demodulate and/or modulate an incoming signal in said communication stage and a power stage (105) comprising a voltage converter (106) able to provide the power supply for a unit (200) by a first current value, the power stage further comprising a regulation circuit (107) adapted to limit the output voltage of the voltage converter, **characterized in that** said regulation circuit (107) comprises a regulator circuit (108) adapted to determine a second current value, said second current value being the current value ($I_{shunt}$) provided in addition to the first current value, the regulator circuit (108) supplying a control signal (S_reg) if said second current value exceeds a predetermined threshold value (Iref), the control signal being sent to a limiter circuit (110) arranged to limit the input voltage of the converter circuit.

2. RF tag receiver unit according to claim 1, **characterized in that** the voltage converter is of the alternating/continuous type.

3. RF tag receiver unit according to claim 2, **characterized in that** the voltage converter (106) includes, at input, an earth generator (1060) composed of a first and a second N-type MOS transistors (1060a, 1060b) connected to each other such that the sources thereof are connected to each other to form the ground of the voltage converter, the drain of the first transistor being connected to the first input terminal (PAD+) and to the gate of the second transistor, whereas the drain of the second transistor is connected to the second input terminal (PAD-) and to the gate of the first transistor, the voltage converter further comprising a plurality of identical structures (1062) forming a voltage modifier part (1061), and **in that** said converter output includes two N-type MOS transistors (1066) wherein the sources of the transistors are connected to each other to form the output line, the drain of one of the transistors being connected to the last structure of the voltage modifier part extending from the first terminal, the drain of the other transistor being connected to the last structure of the voltage modifier part extending from the second terminal, the gate of each transistor being connected to its source.

4. RF tag receiver unit according to claim 3, **characterized in that** the voltage modifier part (1061) is arranged so that, from each of the first and second input terminals (E1, E2) there extends a series of identical structures (1062) connected to each other, the first structure of each series being connected to one of the first and second input terminals (E1, E2) and to the following structure, the connection point between two structures being connected to one of the first or second input terminals (E1, E2) so that each structure is connected to the first terminal and to the second terminal.

5. Receiver unit according to any of the preceding claims, **characterized in that** the limiter circuit (110) includes at least one transistor (TL) connected via the drain thereof to the first input terminal (E1) and via the source thereof to the second input terminal (E2), the control signal (S_reg) being sent to the gate thereof in order to make said at least one transistor more or less conductive.

6. Receiver unit according to claim 5, **characterized in that** the limiter circuit (110) includes a plurality of transistors mounted in parallel.

7. Receiver unit according to any of the preceding claims, **characterized in that** the regulation unit (107) further includes a bandgap voltage generator (109) for supplying the reference voltage (VBG) and the polarization currents to the shunt voltage regulator.

8. Receiver unit according to any of the preceding claims, **characterized in that** the communication stage (104) is adapted to provide a signal (Sc) representative of a communication action which is directly connected to the limiter circuit (110) to prevent regulation during such a communication action.

9. RF tag (1) comprising a control unit (200) including a calculation unit and a memory for performing at least one function, and at least one receiver unit arranged to receive or send a signal and to supply power to said control unit, **characterized in that** said receiver unit is a receiver unit (100) according to any of the preceding claims.

10. RF tag according to claim 9, **characterized in that** the receiver unit (100) is arranged to operate according to a first protocol (P1) using a first frequency (F1).

11. RF tag according to claim 10, **characterized in that** the first protocol (P1) is a long distance protocol.

12. RF tag according to any of claims 9 to 11, **characterized in that** the tag further includes a second receiver unit (100') arranged to operate according to a second protocol (P2) using a second frequency (F2), said second receiver unit being arranged to supply a current (Ihf) for a unit (200), said control unit receiving a current (Ihf+uhf) whose value is the sum of the currents (Iuhf, Ihf) from the first receiver unit (100) and from the second receiver unit (100').

13. RF tag according to claim 12, **characterized in that** the first receiver unit further includes a current mirror circuit (112) used to supply a signal ($S_{I1}$) representative of a current (I1) which is the image of the sum of the first and second receiver unit currents, the second receiver unit (100') further comprising a current mirror circuit (113) used to supply a signal ($S_{I2}$) representative of a current (12) which is the image of the current (Ihf) supplied by the second receiver unit (100') and **in that** the first receiver unit further includes a subtractor circuit (114) for subtracting the current (I2) being the image of the sum of the first and second receiver unit currents from the current (I1) being the image of the current supplied by the second receiver unit and for supplying, to the limiter circuit (110), a signal representative only of the current (Iuhf) from the first receiver unit.

# Fig. 1a

# Fig. 5

# Fig. 6

Fig. 1b

200

$C_{buff}$

109

VBG

108

$I_{shunt}$

$S\_reg$

105

$I_{shunt}$

$U_{UHF}$

$I_{UHF}$

E1

106

E2

110

107

104b

104a

104

103

102

100

PAD +

101

PAD -

Fig. 2

EP 3 082 072 B1

13

# Fig. 3

EP 3 082 072 B1

# Fig. 4

# Fig. 7

## Fig. 8

**RÉFÉRENCES CITÉES DANS LA DESCRIPTION**

**Documents brevets cités dans la description**

- US 20100079921 A1